# DEMANDE DE BREVET EUROPEEN

(11) **EP 3 187 350 A1**
(43) Date de publication de la demande: **05.07.2017**
(21) Numéro de dépôt: 16206093.3
(22) Date de dépôt: 22.12.2016
(51) Int. Cl.: B60J 5/10

(54) **HAYON À LUNETTE SURMOULÉE**

(30) Priorité: 29.12.2015 FR 1563446
(71) Demandeur: Compagnie Plastic Omnium, 69007 Lyon (FR)
(72) Inventeur: PORCHEROT, Didier, 69003 LYON (FR); HACHE, Bertrand, Bloomfield Hills, MI Michigan 48602 (US)
(74) Mandataire: Remy, Vincent Noel Paul

(57) **Abrégé**

L'invention concerne un hayon pour véhicule automobile comprenant une vitre (4) et un élément d'interface en matière plastique comprenant une partie haute (6), une partie basse et une partie centrale, hayon dans lequel l'élément d'interface en matière plastique comprend une piste d'étanchéité pour un joint d'étanchéité (2) et au moins un organe de jonction avec la caisse du véhicule, choisi parmi l'ensemble constitué de : une charnière ; une serrure ; une fixation de vérin équilibreur ; une butée, et dans lequel l'élément d'interface (5) en matière plastique comprend une zone de liaison (11) reliée à la vitre (4) en bordure de celle-ci. Le hayon selon l'invention est caractérisé en ce que la zone de liaison (11) et la vitre (4) sont en contact direct et continu l'une avec l'autre.

## Description

La présente invention concerne les véhicules automobiles et plus particulièrement les hayons en plastique pour de tels véhicules. La présente invention concerne également un procédé de fabrication dudit hayon pour véhicule automobile.

Un hayon pour véhicule automobile comprend généralement une vitre et un élément d'interface entre la vitre et la caisse du véhicule. L'élément d'interface peut être réalisé par moulage et il peut être composé d'une ou plusieurs parties. Il peut notamment comprendre une partie haute, une partie basse et une partie centrale qui peut comprendre les montants latéraux. L'élément d'interface permet notamment de renforcer la rigidité du hayon et d'insérer, entre autres, des câbles électriques dans le hayon. Un hayon comprend également une piste d'étanchéité destinée à garantir la bonne étanchéité avec le joint d'étanchéité porté par l'anneau arrière du véhicule. Cependant, afin d'assurer la meilleure étanchéité possible, entre l'extérieur et l'intérieur du véhicule, il est préférable que la piste d'étanchéité présente le moins possible de discontinuités afin de pouvoir, lors de la fermeture du hayon, épouser continument le joint d'étanchéité porté par l'anneau arrière. De tels problèmes de discontinuité se présentent pour les hayons dans lesquels la piste d'étanchéité est portée par l'élément d'interface dans sa partie haute et basse et par la vitre au niveau de la partie centrale du hayon. Par conséquent, afin de garantir une étanchéité continue lors des changements de piste, qui ont lieu lorsque le joint passe d'un élément d'interface à la vitre et réciproquement, il est nécessaire de recourir à des joints d'étanchéité supplémentaires afin d'éviter les points d'infiltration pouvant se créer à ces changements, ce qui engendre un surcoût du produit et des étapes additionnelles pour fixer ces joints supplémentaires.

Alternativement, il a déjà été proposé un hayon pour véhicule automobile dans lequel la piste d'étanchéité est portée intégralement par la vitre. C'est le cas pour les petits véhicules présentant un hayon entièrement constitué d'une vitre. Cette option présente l'avantage de permettre une visibilité arrière dans l'emplacement habituellement réservé aux montants latéraux. Cependant, cette solution présente l'inconvénient de ne laisser que peu de liberté d'architecture pour le hayon.

Il a également été envisagé des hayons de véhicule automobile dans lesquels la piste d'étanchéité est portée intégralement par l'élément d'interface. Dans un tel cas, la piste d'étanchéité passe de la partie haute à la partie basse de l'élément d'interface par le biais des montants latéraux constituant la partie centrale de cet élément. Cependant, bien qu'une telle solution offre une étanchéité continue assurée uniquement par l'élément d'interface, cette solution implique de gérer l'étanchéité entre la vitre et l'élément d'interface, soit en collant la vitre sur l'élément d'interface, soit en prévoyant un deuxième joint d'étanchéité entre la vitre et l'élément d'interface, ce qui présente de nombreux désavantages. Le collage implique qu'une zone de l'élément d'interface soit prévue comme piste de collage et qu'elle subisse un traitement de surface avant le collage de la vitre. Par conséquent, cette étape complexifie et rallonge le procédé de fabrication du hayon. L'ajout d'un deuxième joint présente l'inconvénient d'ajouter une pièce au processus, avec toutes les conséquences de lourdeur que cela implique.

L'invention a pour but de remédier à ces inconvénients en fournissant un hayon pour véhicule automobile comprenant une vitre et un élément d'interface en matière plastique comprenant une partie haute, une partie basse et une partie centrale, hayon dans lequel l'élément d'interface en matière plastique comprend une piste d'étanchéité pour un joint d'étanchéité et au moins un organe de jonction avec la caisse du véhicule, choisi parmi l'ensemble constitué de : une charnière ; une serrure ; une fixation de vérin équilibreur ; une butée, et dans lequel l'élément d'interface en matière plastique comprend une zone de liaison reliée à la vitre en bordure de celle-ci, caractérisé en ce que la zone de liaison et la vitre sont en contact direct et continu l'une avec l'autre.

Le hayon selon l'invention permet de cumuler les avantages d'avoir une piste d'étanchéité continue, une visibilité arrière accrue tout en conservant une liberté d'architecture du hayon. En effet, la zone de liaison de l'élément d'interface permet le passage de la piste d'étanchéité dans la zone de liaison de l'élément d'interface, en bordure de la vitre et non pas sur celle-ci. Par conséquent, aucun changement de piste d'étanchéité n'est présent dans le hayon selon l'invention puisque la piste d'étanchéité reste sur l'élément d'interface fait de matière plastique, y compris dans sa zone de liaison avec la vitre, ce qui assure la continuité de la piste d'étanchéité dans tout le hayon.

Comme mentionné ci-dessus, le hayon selon l'invention permet d'accroitre la visibilité arrière grâce à la réduction des zones mortes de la vitre. On entend par zone morte, définie en anglais par « black off zone », la zone de la vitre, le plus souvent sombre, qui ne peut être utilisée pour la visibilité du conducteur car elle permet de cacher les zones techniques telles que la colle ou le joint d'étanchéité qui, sinon, pourraient être visibles par transparence de la vitre depuis l'extérieur du véhicule. L'étendue de cette zone morte est réduite dans le hayon selon l'invention grâce notamment à la suppression des bandes de collages en bordure de la vitre.

Le hayon selon l'invention permet également de conserver une liberté d'architecture de la partie haute et de la partie basse de l'élément d'interface, ce qui permet de recourir à des architectures dites classiques pour ces parties. Le recours à ces architectures classiques permet de positionner la piste d'étanchéité, sans aucune restriction, dans toute la partie haute et toute la partie basse de l'élément d'interface et donc de mieux répondre aux contraintes d'architecture du hayon imposées par les constructeurs et propres à chaque véhicule.

On entend par « vitre » toute forme d'un matériau transparent ou translucide. Le matériau utilisé peut être minéral tel que le verre mais également organique tel que le polycarbonate. Bien entendu, tout autre matériau particulièrement adapté à l'industrie automobile est également compris dans cette définition. Dans un but de fournir une meilleure adhérence avec la matière surmoulée, il est également possible de prévoir un traitement spécifique de la vitre sur, au minimum, la partie de la bordure de la vitre qui doit être en contact avec la zone de liaison.

Par « matière plastique de l'élément d'interface », on entend toute matière thermoplastique ou thermodurcissable présentant les caractéristiques nécessaires à la bonne réalisation de l'élément d'interface et à sa bonne liaison avec la vitre. Un tel matériau peut par exemple être du polypropylène chargé en fibre de verre, du polypropylène chargé en fibre de carbone mais également un « Advanced Molding Compound » (AMC), « Bulk Molding Compound » (BMC), un « Sheet Molding Compound » (SMC) ou résine époxy avec un tissu de fibres de carbone.

Avantageusement, le hayon pour véhicule automobile selon l'invention est caractérisé en ce que la zone de liaison est obtenue par mise en contact de la matière plastique à l'état liquide avec la vitre. Dans le cas d'un thermoplastique, l'état liquide est obtenu par fusion. Dans le cas d'un thermodurcissable, l'état liquide est celui de la résine avant réticulation ou cuisson. D'une manière générale, l'état liquide précède l'état solide de la matière, qui forme la zone de liaison.

Encore plus avantageusement, la mise en contact est un surmoulage de la matière plastique sur la vitre.

Alternativement, la mise en contact est une soudure de la matière plastique sur la vitre. Dans la suite de la description, on utilisera le terme « surmouler » pour exprimer le fait qu'il existe un contact direct et continu entre la zone de liaison et la vitre. Cependant, tout moyen permettant d'obtenir le même résultat est envisageable et notamment la soudure.

Selon un premier mode de réalisation, le contact direct et continu entre la zone de liaison de l'une au moins des partie haute, basse et centrale de l'élément d'interface et la vitre peut être obtenu par surmoulage de la face intérieure de la vitre. Par « face intérieure de la vitre », on entend la face qui se trouve à l'intérieur du véhicule une fois le hayon en position fermée.

Lors de la réalisation de l'élément d'interface selon ce mode de réalisation, la matière plastique à l'état liquide de la zone de liaison de l'une au moins des partie haute, basse et centrale de l'élément d'interface est mise en contact uniquement avec la face intérieure de la vitre. Ce mode de réalisation, appliqué spécifiquement à la partie centrale, permet la réalisation de l'élément d'interface d'un seul tenant avec une partie centrale constituée par deux fines bandes de matière plastique en contact uniquement avec la face intérieure de la vitre qui relie la partie haute et la partie basse de l'élément d'interface. Les deux fines bandes de matière plastique, qui constituent la partie centrale de l'élément d'interface et donc la zone de liaison, peuvent être de longueur variable. Elles assurent le rôle de piste d'étanchéité pour cette partie. La réalisation d'un seul tenant de l'élément d'interface permet d'obtenir une étanchéité parfaite du fait que la piste d'étanchéité se trouve toujours sur l'élément d'interface, y compris dans la partie centrale où elle est formée par la matière en plastique constituant la zone de liaison.

Selon un deuxième mode de réalisation, le contact direct et continu entre la zone de liaison de l'une au moins des partie haute, basse et centrale de l'élément d'interface et la vitre peut être obtenu par surmoulage de la face intérieure de la vitre et de la tranche de la vitre, qui correspond à l'épaisseur de la vitre, ce qui présente l'avantage d'obtenir une meilleure adhérence de la matière plastique sur la vitre et aussi de fournir une raideur plus importante à la partie centrale de l'élément d'interface, du fait de l'augmentation de l'inertie obtenue grâce au surmoulage additionnel de la tranche de la vitre. En appliquant ce mode de réalisation à la partie centrale, on obtient, de la même façon que dans le premier mode de réalisation, un élément d'interface d'un seul tenant avec une partie centrale constituée par deux bandes de matière plastique en contact, cette fois-ci, avec la face intérieure et la tranche de la vitre et qui relient de ce fait, la partie haute et la partie basse de l'élément d'interface. Les deux fines bandes de matière plastique constituent la partie centrale de l'élément d'interface et donc la zone de liaison. Le surmoulage de la tranche est, en l'état, visible de l'extérieur l'extérieure du véhicule par le consommateur, il peut donc être nécessaire, pour contraintes esthétiques notamment, d'avoir recours à des peaux extérieures pour masquer le surmoulage. Là encore les longueurs de la zone de liaison, aussi bien sur la face intérieure de la vitre que sur sa tranche, peuvent être variables.

Selon un troisième mode de réalisation, le contact direct et continu entre la zone de liaison de l'une au moins des partie haute, basse et centrale de l'élément d'interface et la vitre est obtenu par surmoulage de l'ensemble de la bordure de la vitre, c'est-à-dire, la face intérieure, la tranche et la face extérieure. De ce fait, la rigidité de la partie centrale de l'élément de liaison et l'adhésion de la matière plastique sur la vitre sont encore accrues. La tenue de la vitre est également améliorée du fait qu'elle est surmoulée sur les trois côtés de sa bordure. Pour les mêmes contraintes esthétiques que celles évoquées dans le mode de réalisation précédent, il peut être nécessaire de recourir à des peaux extérieures pour masquer le surmoulage de la tranche ainsi que de la partie extérieure de la vitre. Comme mentionné dans les deux modes de réalisation précédents, les longueurs de la zone de liaison, aussi bien sur la face intérieure de la vitre que sur sa tranche ou sa face extérieure, peuvent être variables.

Il est important de noter qu'une combinaison de ces trois modes de réalisation est envisageable au sein d'un même hayon. En effet, il est possible, dans un hayon selon l'invention, que le contact direct et continu de la zone de liaison de l'élément d'interface soit réalisé selon des modes de réalisation différents pour la partie haute, centrale et basse de l'élément d'interface. Ainsi à titre d'exemple non limitatif, un hayon selon l'invention peut présenter une zone de liaison en contact direct et continu avec la vitre selon le premier mode de réalisation pour la partie haute de l'élément d'interface, selon le deuxième mode de réalisation pour la partie centrale de l'élément d'interface et selon le troisième mode de réalisation pour la partie basse de l'élément d'interface.

Dans un mode de réalisation alternatif, pouvant comprendre un contact direct et continu entre la zone de liaison et la vitre selon l'un ou une combinaison des modes de réalisation décrits ci-dessus, la zone de liaison de l'élément d'interface peut être élargie, dans sa partie centrale, dans un but de donner de la raideur à cette zone en augmentant l'inertie. De ce fait, les bandes de matière plastique formant la partie centrale de l'élément d'interface peuvent présenter une forme concave de « U », de « V », de « W » ou de « C ».

L'invention a aussi pour objet un procédé de réalisation d'un hayon pour véhicule automobile, caractérisé en qu'il comprend les étapes suivantes :
- insertion d'une vitre dans un moule comprenant une empreinte apte à former un élément d'interface en matière plastique comprenant une zone de liaison reliée à la vitre, en bordure de celle-ci, par un contact direct et continu ;
- introduction de la matière plastique dans l'empreinte du moule ; et
- démoulage du hayon.

On entend par « empreinte », la cavité délimitée à l'intérieur du moule, une fois celui-ci fermé.

Le procédé de réalisation du hayon pour véhicule automobile peut être, par exemple, un procédé du type moulage par injection, moulage par compression, injection-compression ou encore celui connu sous le sigle RTM, pour « resin transfer moulding », également désignée « injection-RTM ». Cependant, tout procédé apparaissant clairement à l'homme du métier peut être envisagé dans le cadre de l'invention.

Dans le cas d'un procédé du type moulage par injection, l'introduction de la matière plastique peut avoir lieu une fois la vitre insérée dans le moule et que celui-ci est fermé. L'injection de la matière plastique peut être effectuée par le biais d'une buse d'injection lorsque le moule est fermé. Ainsi, la vitre est positionnée dans l'empreinte du moule apte à l'accueillir et à la maintenir fixe, durant l'injection de la matière plastique, via des moyens de fixation, assurant de ce fait la bonne formation du contact direct et continu de la zone de liaison avec la bordure de la vitre.

Dans le cas d'un procédé du type moulage par compression, par contre, l'introduction de la matière plastique a lieu avant la fermeture du moule. De ce fait, la matière plastique est placée dans la partie de l'empreinte prévue à cet effet avant, en même temps ou après l'insertion de la vitre, la vitre étant positionnée dans l'empreinte du moule apte à l'accueillir et à la maintenir fixe, durant la compression de la matière plastique, via des moyens de fixation, pouvant être similaire à ceux du procédé précédent. Le moule est ensuite fermé, ce qui a pour conséquence de compresser la matière plastique avec une pression important au sein du moule, donnant de ce fait à la matière plastique la forme de l'élément d'interface souhaité ainsi que le contact direct et continue de la zone de liaison avec la bordure de la vitre.

Dans le cas d'un procédé du type injection-compression, la vitre est positionnée et fixée dans l'empreinte du moule avant l'injection de la matière plastique. L'injection de la matière plastique s'effectue dans un moule partiellement fermé. Après ou pendant l'injection de la matière plastique, le moule est fermé, exerçant ainsi une compression sur la matière qui prend ainsi la forme de l'élément d'interface souhaité ainsi que le contact direct et continu de la zone de liaison avec la bordure de la vitre. Ce procédé peut être utile pour améliorer l'aspect des pièces et limiter leurs contraintes internes.

Enfin, dans le cas d'un procédé du type RTM, la partie fibrée du futur élément d'interface est placée dans une empreinte du moule ouvert avant, en même temps ou après l'insertion de la vitre, en bordure de celle-ci. Les fibres sont réparties en bordure de la vitre en fonction du mode de réalisation ou de la combinaison de modes de réalisation choisis pour la zone de liaison à former. Le moule est ensuite fermé et une résine est injectée, lui permettant d'imprégner les fibres et de former l'élément d'interface en matière plastique et, par conséquent, la zone de liaison en bordure de la vitre.

L'invention a aussi pour objet un moule pour la réalisation d'un hayon pour véhicules automobiles comprenant une empreinte apte à accueillir une vitre et qui comporte des moyens de fixation pour la vitre, caractérisé en ce que l'empreinte est apte à former un élément d'interface en matière plastique comprenant une zone de liaison reliée à la vitre en bordure de celle-ci, par un contact direct et continu.

L'invention sera mieux comprise à la lecture des figures annexées, qui sont fournies à titre d'exemples et ne présentent aucun caractère limitatif, dans lesquelles :
La figure 1 représente un arrière de véhicule connu de l'état de la technique.
La figure 2 représente une coupe d'un arrière de véhicule connu de l'état de la technique.
La figure 3 représente un hayon pour véhicule automobile selon l'invention.
La figure 4 représente un moule pour la réalisation d'un hayon pour véhicules automobiles selon l'invention.
La figure 5 représente un moule pour la réalisation d'un hayon pour véhicules automobiles selon l'invention en position ouverte.
Les figures 6a, 7a et 8a sont des sections selon l'axe VI-VI' de la figure 3, représentant différentes variantes possibles de la zone de liaison de la partie haute de l'élément d'interface du hayon selon l'invention.
Les figures 6b, 7b et 8b sont des sections selon l'axe VII-VII' de la figure 3, représentant différentes variantes possibles de la zone de liaison de la partie basse de l'élément d'interface du hayon selon l'invention.
Les figures 6c, 7c, 8c, 9, 10 et 11 sont des sections selon l'axe VIII-VIII' de la figure 3, représentant différentes variantes possibles de la zone de liaison de la partie centrale de l'élément d'interface du hayon selon l'invention.

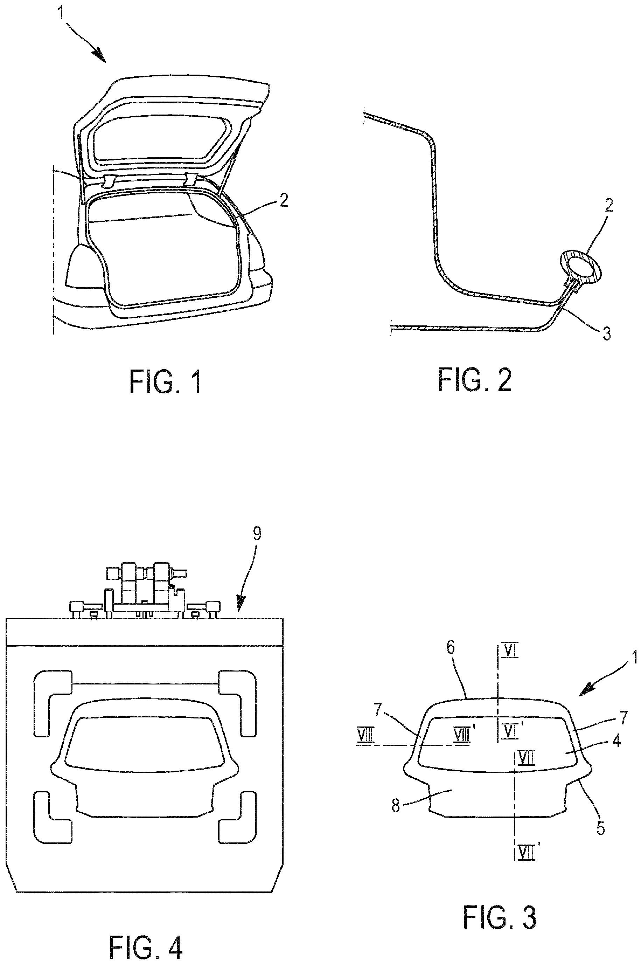

On se réfère maintenant à la figure 1 qui représente l'arrière de véhicule connu de l'état de la technique dans lequel un hayon 1 est en position relevé laissant apparaitre un joint d'étanchéité 2 porté par l'anneau arrière du véhicule.

La figure 2 représente une coupe d'un arrière de véhicule connu de l'état de la technique, illustrant la feuillure 3 de l'anneau arrière du véhicule portant un joint d'étanchéité 2.

La figure 3 représente la face intérieure d'un hayon 1 pour véhicule automobile selon l'invention comprenant une vitre 4 et un élément d'interface 5. L'élément d'interface 5 est une seule et même pièce en matière plastique comprenant une partie haute 6, une partie centrale 7 et une partie basse 8. L'élément d'interface 5 porte également un organe de jonction non représenté pouvant être une charnière, une serrure, une fixation de vérin équilibreur et une butée. La vue de l'intérieur du hayon 1 représentée sur cette figure, permet de représenter la continuité de la matière plastique de l'élément d'interface 5 qui, sur cette face du hayon 1, est continue autour de la vitre 4, formant ainsi une piste d'étanchéité continue dans les parties haute, basse et centrale de l'élément d'interface 5.

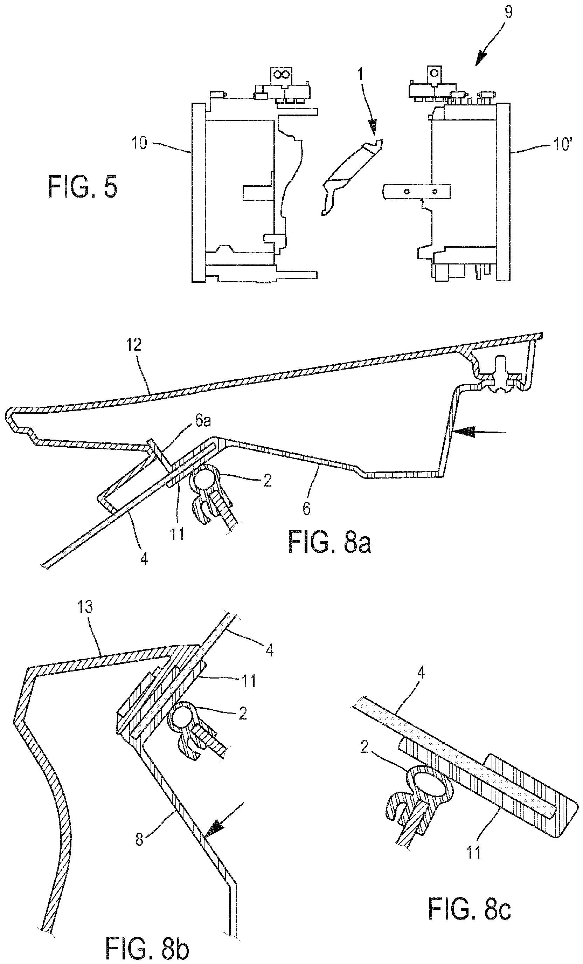

Les figures 4 et 5 représentent un moule 9 pour la réalisation d'un hayon 1 selon l'invention. Le moule 9 comprend une empreinte (non représentée), délimitée par les deux parties du moule 10 et 10' une fois le moule fermé, et des moyens de fixation de la vitre non représentés.

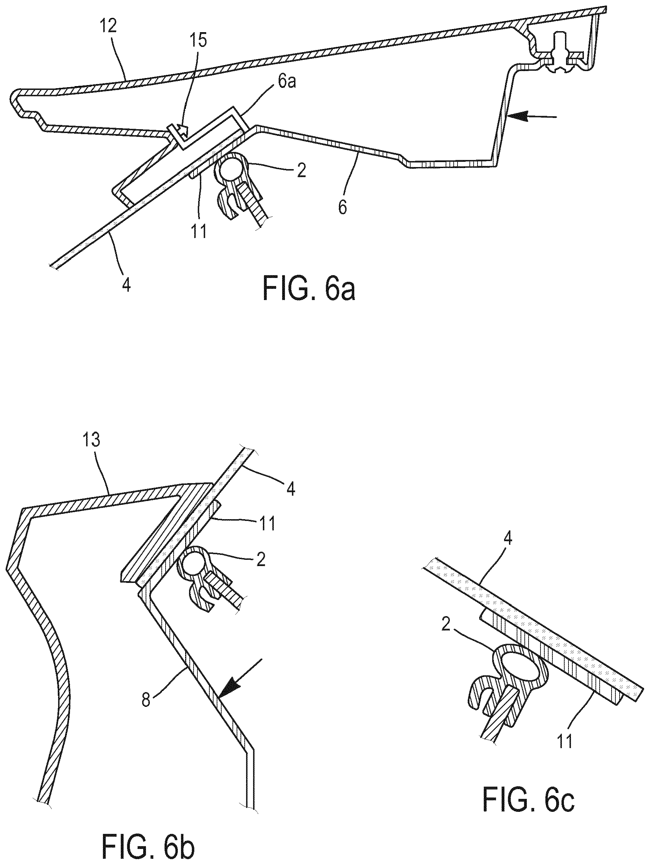

Les sections des figures 6a, 7a et 8a sont réalisées selon l'axe VI-VI' de la figure 3.

La figure 6a illustre la partie haute du hayon 1 dans laquelle la zone de liaison 11 de la partie haute 6 de l'élément d'interface 5 est en contact direct et continu avec la vitre 4. Ce contact direct et continu est représenté selon le premier mode de réalisation de l'invention, c'est-à-dire, par surmoulage de la face intérieure de la vitre 4. Le joint d'étanchéité 2, porté par l'anneau arrière du véhicule, est ici appuyé sur la zone de liaison 11 qui constitue, dès lors, la piste d'étanchéité du hayon 1. Cependant, le joint d'étanchéité 2 peut également prendre appui sur des emplacements situés hors de la zone de liaison 11 de la partie haute 6 de l'élément d'interface 5, comme l'emplacement exemplifié par la flèche. Enfin, une peau extérieure 12 recouvre l'ensemble décrit et peut permettre de remplir des critères notamment esthétiques et aérodynamiques du hayon 1. La peau extérieure 12 peut être fixée à la partie haute 6 de l'élément d'interface par l'intermédiaire d'un moyen de fixation 15 qui permet la fixation de la peau extérieure 12 à une languette 6a. La languette 6a est, dans cette figure, une extension de la partie haute 6 de l'élément d'interface 5, réalisée d'un seul tenant avec l'élément d'interface et exerce le rôle de languette de fixation pour la peau extérieure 12. Dans une variante non représentée, la liaison entre la peau extérieure 12 et la partie haute 6 de l'élément d'interface 5 peut être assurée, non par une languette 6a, mais par une pièce rapportée ou par un aménagement spécifique de la peau extérieure 12.

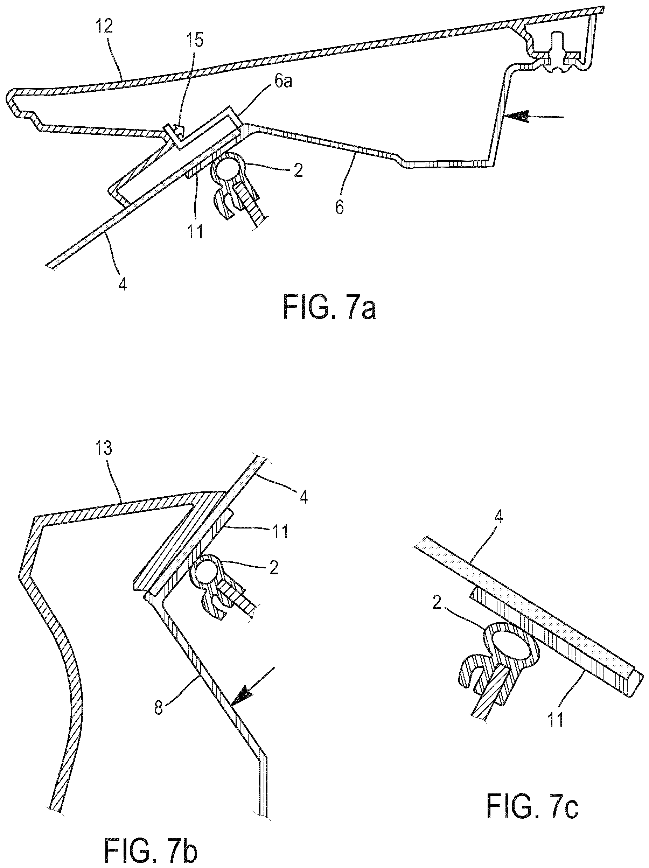

La figure 7a est identique à la figure 6a à l'exception du contact direct et continu de la zone de liaison 11 de l'élément d'interface 5 qui est réalisé selon le deuxième mode de réalisation de l'invention, c'est-à-dire, par surmoulage de la face intérieure de la vitre et de la tranche de la vitre 4.

La figure 8a est identique à la figure 6a à l'exception du contact de la zone de liaison 11 de l'élément d'interface 5 et de la languette 6a. En effet, le contact de la zone de liaison 11 de l'élément d'interface 5 est réalisé selon le troisième mode de réalisation de l'invention, c'est-à-dire, par surmoulage de l'ensemble de la bordure de la vitre 4. La languette 6a est, dans cette figure, une extension de la matière plastique de la zone de liaison 11 qui surmoule la face extérieure de la vitre 4 et s'entend donc sur toute la longueur de la zone de liaison 11 de la partie haute 6 de l'élément d'interface 5. La languette 6a exerce, dans cet exemple, le rôle de fixation avec la peau extérieure 12.

Les sections des figures 6b, 7b et 8b sont réalisées selon l'axe VII-VII' de la figure 3.

La figure 6b illustre la partie basse du hayon 1 dans laquelle la zone de liaison 11 de la partie basse 8 de l'élément d'interface 5 est en contact direct et continu avec la vitre 4. Ce contact direct et continu est représenté selon le premier mode de réalisation de l'invention, c'est-à-dire, par surmoulage de la face intérieure de la vitre 4. Le joint d'étanchéité 2, porté par l'anneau arrière du véhicule, est ici appuyé sur la zone de liaison 11 qui constitue, dès lors, la piste d'étanchéité du hayon 1. Cependant, le joint d'étanchéité 2 peut également prendre appui sur des emplacements situés hors de la zone de liaison 11 de la partie basse 8 de l'élément d'interface 5, comme l'emplacement exemplifié par la flèche. Enfin, une peau extérieure 13 recouvre l'ensemble décrit et peut permettre de remplir des critères notamment esthétiques et aérodynamiques du hayon 1. La peau extérieure 13 peut être fixée à la vitre 4 par des moyens de fixation non représentés. De tels moyens n'ont pas pour but de fournir l'étanchéité à l'ensemble du fait que l'étanchéité est déjà assurée par le contact direct et continu entre la zone de liaison 11 et la vitre 4. Un moyen de fixation cité peut être, par exemple, une colle ou tout autre moyen d'adhésion permettant l'adhésion de la peau extérieure 13 à la vitre 4.

La figure 7b est identique à la figure 6b à l'exception du contact direct et continu de la zone de liaison 11 de l'élément d'interface 5 qui est réalisé selon le deuxième mode de réalisation de l'invention, c'est-à-dire, par surmoulage de la face intérieure de la vitre et de la tranche de la vitre 4.

La figure 8b est identique à la figure 6b à l'exception du contact de la zone de liaison 11 de l'élément d'interface 5 et de la fixation de la peau extérieure 13. En effet, le contact direct et continu de la zone de liaison 11 de l'élément d'interface 5 est réalisé selon le troisième mode de réalisation de l'invention, c'est-à-dire, par surmoulage de l'ensemble de la bordure de la vitre 4. Dans cet exemple, la matière plastique de la zone de liaison 11 qui surmoule la face extérieure de la vitre 4 est également formée de manière à permettre la fixation de la peau extérieure 13 par encliquetage. En effet, la peau extérieure 13 est formée en son extrémité de manière à pouvoir encliqueter la matière plastique de la zone de liaison 11.

Les sections des figures 6c, 7c et 8c sont réalisées selon l'axe VIII-VIII' de la figure 3.

La figure 6c illustre la partie centrale du hayon 1 dans laquelle la zone de liaison 11 de la partie centrale 7 de l'élément d'interface 5 est en contact direct et continu avec la vitre 4. Ce contact direct et continu est représenté selon le premier mode de réalisation de l'invention, c'est-à-dire, par surmoulage de la face intérieure de la vitre 4. Le joint d'étanchéité 2, porté par l'anneau arrière du véhicule, est ici appuyé sur la zone de liaison 11 qui constitue, dès lors, la piste d'étanchéité du hayon 1, ce qui permet d'assurer une piste d'étanchéité continue sur l'ensemble de l'élément d'interface 5, y compris dans sa partie centrale 7 en bordure de la vitre 4. Dans cet exemple, la partie centrale 7 de l'élément d'interface 5 est constitué uniquement par la zone de liaison 11 de la partie centrale de l'élément d'interface 5, il n'y a donc pas d'autre emplacement possible hors de la zone de liaison 11, pour la partie centrale 7, contre lequel le joint d'étanchéité 2 peut prendre appuie. En d'autres termes, la zone de liaison 11 représente aussi bien la piste d'étanchéité, contre laquelle le joint d'étanchéité 2 s'appuie, que la partie centrale 7 de l'élément d'interface 5, dans sa totalité.

La figure 7c est identique à la figure 6c à l'exception du contact direct et continu de la zone de liaison 11 de l'élément d'interface 5 qui est réalisé selon le deuxième mode de réalisation de l'invention, c'est-à-dire, par surmoulage de la face intérieure de la vitre et de la tranche de la vitre 4.

La figure 8c est identique à la figure 6c à l'exception du contact direct et continu de la zone de liaison 11 de l'élément d'interface 5 qui est réalisé selon le troisième mode de réalisation de l'invention, c'est-à-dire, par surmoulage de l'ensemble de la bordure de la vitre 4.

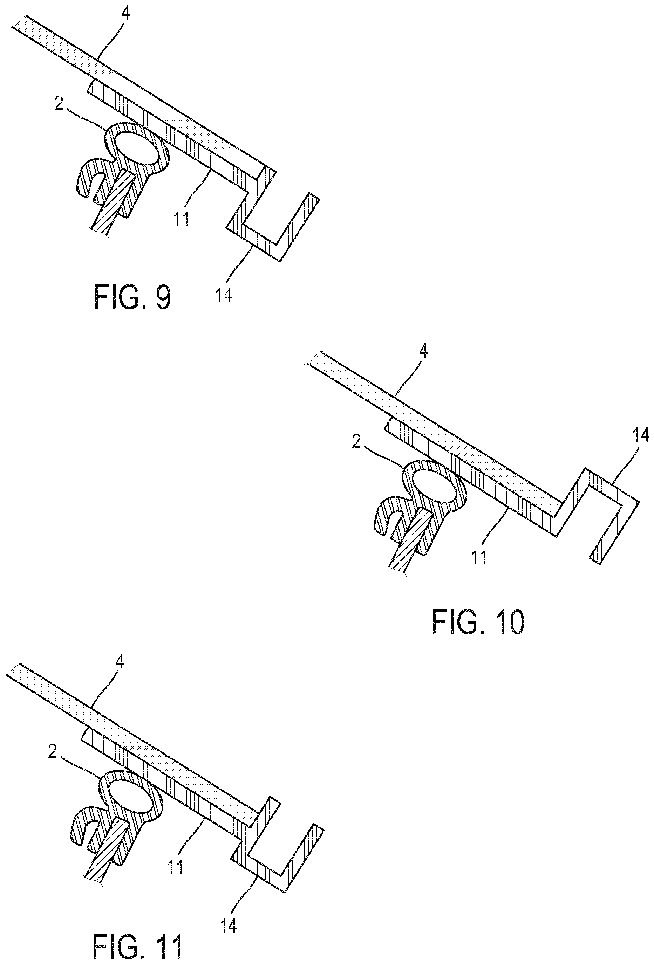

Les sections des figures 9, 10 et 11 sont également réalisées selon l'axe VIII-VIII' de la figure 3. Elles représentent des variantes de la figure 7c, selon le mode de réalisation alternatif décrit précédemment.

La figure 9 est une variante de la figure 7c, du fait que, la partie centrale 7 de l'élément d'interface 5 présente une forme concave 14 de « U » qui permet de donner de la raideur à cette zone en augmentant l'inertie. La partie centrale 7 de l'élément d'interface 5 est, dès lors, représentée sur cette figure par la zone de liaison 11 et la forme concave 14. La forme concave 14 de « U » est, dans cet exemple, située du côté de la face intérieure de la vitre 4, ce qui lui permet de répondre à des critères esthétiques, car elle peut facilement être dissimulée, tout en assurant la fonction de raideur de la zone.

La figure 10 est identique à la figure 9 à l'exception que la forme concave 14 de « U » est située du côté de la face extérieure de la vitre 4, ce qui lui permet d'assurer la l'augmentation de la raideur de cette zone, et ce malgré le manque de place que cette partie du hayon 1 peut comporter, avec notamment la présence du vérin (non représenté).

La figure 11 est identique aux figures 9 et 10 à l'exception que la forme concave 14 de « U » est située à cheval entre les faces intérieure et extérieure de la vitre 4, ce qui lui permet d'assurer la l'augmentation de la raideur de cette zone, malgré le manque de place que cette partie du hayon 1 peut comporter, avec notamment la présence du vérin (non représenté), et également de répondre à des critères esthétiques car elle peut être plus facilement dissimulée que la forme concave 14 de la figure 10 pour des raison qui apparaissent évidentes.

L'invention n'est pas limitée aux modes de réalisation présentés et d'autres modes de réalisation apparaîtront clairement à l'homme du métier.

## Revendications

1. Hayon (1) pour véhicule automobile comprenant une vitre (4) et un élément d'interface (5) en matière plastique comprenant une partie haute (6), une partie basse (8) et une partie centrale (7), hayon (1) dans lequel l'élément d'interface (5) en matière plastique comprend une piste d'étanchéité pour un joint d'étanchéité (2) et au moins un organe de jonction avec la caisse du véhicule, choisi parmi l'ensemble constitué de : une charnière ; une serrure ; une fixation de vérin équilibreur ; une butée, et dans lequel l'élément d'interface (5) en matière plastique comprend une zone de liaison (11) reliée à la vitre (4) en bordure de celle-ci,
**caractérisé en ce que** la zone de liaison (11) et la vitre (4) sont en contact direct et continu l'une avec l'autre.

2. Hayon (1) pour véhicule automobile selon la revendication 1, **caractérisé en ce que** la zone de liaison (11) est obtenue par mise en contact de la matière plastique à l'état liquide avec la vitre (4).

3. Hayon (1) pour véhicule automobile selon la revendication 2, **caractérisé en ce que** la mise en contact est un surmoulage de la matière plastique sur la vitre (4).

4. Hayon (1) pour véhicule automobile selon la revendication 2, **caractérisé en ce que** la mise en contact est une soudure de la matière plastique sur la vitre (4).

5. Procédé de réalisation d'un hayon (1) pour véhicules automobiles, caractérisé en qu'il comprend les étapes suivantes :
- insertion d'une vitre (4) dans un moule (9) comprenant une empreinte apte à former un élément d'interface (5) en matière plastique comprenant une zone de liaison (11) reliée à la vitre (4), en bordure de celle-ci, par un contact direct et continu;
- introduction de la matière plastique dans l'empreinte du moule ; et
- démoulage du hayon (1).

6. Procédé selon la revendication 5, **caractérisé en ce que** le procédé est un procédé de moulage par injection, et **en ce que** l'étape d'introduction de la matière plastique dans l'empreinte du moule (9) est réalisée après la fermeture du moule (9).

7. Procédé selon la revendication 5, **caractérisé en ce que** le procédé est un procédé de moulage par compression, et **en ce que** l'étape d'introduction de la matière plastique dans l'empreinte du moule (9) est réalisée avant la fermeture du moule (9).

8. Moule (9) pour la réalisation d'un hayon (1) pour véhicules automobiles comprenant une empreinte apte à accueillir une vitre (4) et qui comporte des moyens de fixation pour la vitre (4), **caractérisé en ce que** l'empreinte est apte à former un élément d'interface (5) en matière plastique comprenant une zone de liaison (11) reliée à la vitre (4) en bordure de celle-ci, par un contact direct et continu.
